# EUROPEAN PATENT APPLICATION

(11) **EP 1 992 646 A1**
(43) Date of publication of application: **19.11.2008**
(21) Application number: 07714028.3
(22) Date of filing: 09.02.2007
(51) Int. Cl.: C08F 8/00

(54) **VINYL POLYMER HAVING POLAR FUNCTIONAL GROUP AND METHOD FOR PRODUCTION THEREOF**

(30) Priority: 14.02.2006 JP 2006037268
(71) Applicant: Kaneka Corporation, Kita-ku Osaka-shi, Osaka 530-8288 (JP)
(72) Inventor: FUJITA, Nao, Settsu-shi, Osaka 566-0072 (JP); NAKAGAWA, Yoshiki, Takasago-shi, Hyogo 676-0027 (JP)
(74) Representative: Hart-Davis, Jason
(86) International application number: PCT/JP2007/052416
(87) International publication number: WO 2007/094270

(57) **Abstract**

A first object of the present invention is to provide a vinyl polymer that has a molecular chain into which a structure containing a polar functional group is introduced, and that is useful as a precursor of a graft polymer. A second object of the present invention is to provide a process for producing the vinyl polymer. These objects can be achieved by the present invention providing a vinyl polymer having a polar functional group (X), and further having, at the position of at least one molecular terminal thereof, a group (A) containing a carbon-carbon double bond.

## Description

### TECHNICAL FIELD

The present invention relates to a vinyl polymer having a polar functional group, and further having, at its molecular terminal, a carbon-carbon double bond; and a process for producing the polymer.

### BACKGROUND ART

In recent years, approaches based on a polymer blend/alloy wherein two or more polymers are combined with each other have been actively made in order to cause polymeric material to satisfy a requirement that the material should have a higher performance and a higher function. When different polymers are mixed with each other, the individual polymers are not compatible with each other in many cases so that macroscopic phase-separation is caused. Therefore, physical properties of the resultant become extremely lower than those of the individual polymers before they are mixed. Thus, there has widely been used a method in which in order to cause advantages of individual polymer to be exhibited by mixing the polymers with each other, a compatibilizing agent is used together to control the morphology. As the compatibilizing agent, various random form, block form or graft form copolymers are used. These copolymers themselves may each be used as the material.

One out of known processes for synthesizing a block form or a graft form copolymer is a process using a reactive polymer having a functional group, that is, the so-called macromonomer process on the basis of copolymerization of a monomer which is to be a main chain with a polymer which is to be graft chains. This macromonomer is a polymer having, at a terminal of its molecular main chain, a polymerizable functional group such as a carboxyl group, an amino group, a hydroxyl group, or a group containing a carbon-carbon double bond. The use of a macromonomer gives good characteristics that a copolymer having a controlled structure is synthesized with relative ease and further a copolymer which is not easily synthesized by any other process can be synthesized. Attention has been paid to synthesis processes using this macromonomer, in particular, in a point that a graft polymer of which graft chains have controlled chemical structures can be obtained by use of a macromonomer having an average molecular weight and a molecular weight distribution each of which is beforehand controlled.

This macromonomer is useful as, for example, a component for a curable composition, as well as useful for obtaining a graft polymer. In this case also, attention has been paid in a point that by use of a macromonomer having an average molecular weight and a molecular weight distribution each of which is beforehand controlled, a cured product having controlled chemical structures, such as a controlled net chain-length, can be obtained.

In general, however, a macromonomer which is a vinyl polymer having, at its terminal, a functional group, has not been synthesized much since control of the synthesis is difficult. It is particularly difficult to produce a macromonomer having, at its terminal, a group containing a carbon-carbon bond.

In connection with polymers having a functional group at their terminal, disclosed are, for example, a process of using disulfide as a chain transfer agent to synthesize a (methacrylic polymer having an alkenyl group at each terminal thereof (see, for example, JP-A-5-255415 and JP-A-5-262808), and a process of using a iodine compound as a chain transfer agent to synthesize a polymer having a hydroxyl group at its terminal (see, for example, JP-A-2000-327713). According to these synthesis processes, however, it is difficult to introduce a functional group certainly to the terminal. Moreover, there remains a problem that termination reaction or chain transfer reaction as a side reaction cannot be restrained if a disulfide compound is not used in a large amount equal to or more than that of a polymerizable monomer. Furthermore, even if any chain transfer agent is used, the molecular weight distribution of the resultant polymer is broad and the chemical structure thereof is not very much controlled.

In recent years, polymerization based on a living polymerization method has been actively researched (see, for example, Patent Documents JP-A-2000-44626, JP-A-191728, and Pamphlet of International Publication WO99/65963). According to the synthesis of a polymer by these polymerization methods, a molecular weight or the molecular weight distribution are easily controlled and further a polymer having a functional group at its terminal can be produced with relative ease by converting an active group of a living terminal to any substituent.

### DISCLOSURE OF THE INVENTION

### PROBLEMS TO BE SOLVED BY THE INVENTION

In recent years, more importance has been attached to a matter that polymeric material is caused to have an optimal performance in accordance with the use purpose thereof.

Usually, in order to cause polymeric material to have a property, a method for introducing one or more out of various functional groups thereto is frequently adopted. However, when a monomer or initiator containing a polar functional group is used for the introduction of the polar functional group, an unsatisfactory polymerization may be caused in accordance with the kind of the polar functional group or the method for the polymerization. For example, a problem that the catalyst is inactivated and other problems are caused. For this reason, a polymer into which a polar functional group is introduced as is desired is not necessarily produced with ease.

Thus, a first object of the present invention is to provide a vinyl polymer that has a molecular chain into which a structure containing a polar functional group is introduced, and that is useful as a precursor of a polar block or graft polymer. A second object of the present invention is to provide a process making it possible to produce the vinyl polymer, which is novel, effectively.

The present inventors have made eager investigations to solve the above problems, so as to succeed in the production of a new vinyl polymer for solving the above problems effectively. Thus, the invention has been made.

Accordingly, the present invention relates to a vinyl polymer having a polar functional group (X), and further having, at a position of at least one molecular terminal thereof, a group (A) containing a carbon-carbon double bond (hereinafter referred to merely as the "vinyl polymer (I)").

The above polar functional group (X) may be at least one selected from the group consisting of a carboxyl group, a hydroxyl group, an epoxy group, an amino group, an amide group, a silyl group, an acetylacetonato group, and a mercapto group.

The above main chain of the vinyl polymer is preferably produced by polymerizing at least one monomer, as a main monomer, selected from the group consisting of a (meth) acrylic monomer, an acrylonitrile based monomer, an aromatic vinyl monomer, a fluorine-containing vinyl monomer, and a silicon-containing vinyl monomer.

The vinyl polymer preferably has a number-average molecular weight of 3000 or more.

As for the vinyl polymer, it is preferable that a ratio of a weight-average molecular weight (Mw) to a number-average molecular weight (Mn) (Mw/Mn) is less than 1.8, the molecular weights being measured by gel permeation chromatography.

As for the vinyl polymer, it is preferable that the group (A) containing a carbon-carbon double bond is a group represented by the following general formula 1:

-OC (O)C(R¹)=CH₂ (1)

wherein R¹ represents a hydrogen atom, or a hydrocarbon group which has 1 to 20 carbon atoms and may have one or two oxygen atoms.

It is preferable that R¹ in the above general formula 1 is hydrogen or a methyl group.

It is preferable that the above group (A) containing a carbon-carbon double bond is a group represented by the following general formula 2:

-R³-C(R²)=CH₂ (2)

wherein R² represents a hydrogen atom, or a hydrocarbon group which has 1 to 20 carbon atoms and may have one or two oxygen atoms, and R³ represents a direct bond or a hydrocarbon group having 1 to 20 carbon atoms.

It is preferable that R² in the above general formula 2 is a hydrogen atom or a methyl group.

The above vinyl polymer may be a linear polymer or a branched polymer.

It is preferable that the main chain of the above vinyl polymer is produced by radical polymerization.

It is preferable that the above radical polymerization is living radical polymerization and it is more preferable that the living radical polymerization is atom transfer radical polymerization.

It is preferable that a percentage of a constituting unit having the polar functional group (X) in constituting units which originate from a monomer constituting the main chain of the above vinyl polymer is from 1 to 100% by mol.

It is preferable that at least 0.8 or more polar functional groups (X) are contained per molecule.

Each of the above polar functional groups (X) may be located at random in the molecular chain, or may be arranged in a block form or a gradient form in the molecular chain.

The present invention is also relates to a process for producing the above vinyl polymer, characterized in that the process comprises: copolymerizing a monomer (ii) containing a functional group (Y) to yield a vinyl monomer, and/or using an initiator containing a functional group (Y) to yield a vinyl polymer; and then converting the functional group (Y) to the polar functional group (X).

It is preferable that the above functional group (Y) is a group represented by the following general formula 3:

-C(O)-O-Z (3)

wherein Z is represented by the following general formula 4:

-Cₓ(R⁴)(R⁵)(R⁶) (4)

wherein Cₓ represents a carbon atom or a silicon atom, R⁴ to R⁶ each represent a hydrocarbon group having 1 to 20 carbon atoms, and R⁴ to R⁶ may be the same or different and may be independent of each other or bonded to each other.

It is preferable that the group Z in the general formula 3 is a group selected from the group consisting of a t-butyl group, an isobornyl group, a norbornyl group, an adamanthyl group, a triphenylmethyl group, and a trimethylsilyl group.

### EFFECTS OF THE INVENTION

The vinyl polymer (I) of the present invention is useful as a macromonomer since the polymer has, at its molecular terminal(s), the group (A), which contains a carbon-carbon double bond. Furthermore, the polymer has the polar functional group (X); therefore, the vinyl polymer (I) itself, or a block-or graft-form copolymer obtained by causing the vinyl polymer (I) to react with other monomer(s) and/or polymer(s) is suitable as a resin modifier or a compatibilizing agent. Additionally, the vinyl polymer (I) of the present invention is also used suitably as a surfactant, emulsifier, or dispersion stabilizer since the vinyl polymer (I) of the invention has the polar functional group (X). Furthermore, the vinyl polymer (I) of the present invention may be made into a curable composition by itself or by incorporating various additives into the polymer.

According to the process for producing the vinyl polymer of the present invention, a polymer in which the position of a structure containing a polar functional group, the introduced amount thereof, and others are controlled in accordance with the polarity required for various use purposes, is obtained.

### Best Mode for Carrying Out the Invention

The following will describe, in detail, the vinyl polymer (I) of the present invention, which has a polar functional group (X) and further has, at its molecular terminal(s), a group (A) containing a carbon-carbon double bond; and the process for producing this polymer.

### <<Main chain of the polymer>>

The vinyl monomer which constitutes the main chain of the vinyl polymer of the present invention is not particularly limited, and any of various monomers can be used. Examples of the vinyl monomer include (meth) acrylic acid monomers, such as (meth)acrylic acid, methyl (meth)acrylate, ethyl (meth)acrylate, n-propyl (meth)acrylate, isopropyl (meth)acrylate, n-butyl (meth)acrylate, isobutyl (meth)acrylate, t-butyl (meth)acrylate, n-pentyl (meth)acrylate, n-hexyl (meth)acrylate, cyclohexyl (meth)acrylate, n-heptyl (meth)acrylate, n-octyl (meth)acrylate, 2-ethylhexyl (meth)acrylate, nonyl (meth)acrylate, decyl (meth) acrylate, dodecyl (meth)acrylate, phenyl (meth)acrylate, tolyl (meth)acrylate, benzyl (meth)acrylate, 2-methoxyethyl (meth)acrylate, 3-methoxybutyl (meth)acrylate, 2-hydroxyethyl (meth)acrylate, 2-hydroxypropyl (meth)acrylate, stearyl (meth)acrylate, glycidyl (meth)acrylate, 2-aminoethyl (meth)acrylate, γ-(methacryloyloxypropyl)trimethoxysilane, ethylene oxide adduct of (meth)acrylic acid, trifluoromethylmethyl (methacrylate, 2-trifluoromethylethyl (meth)acrylate, 2-perfluoroethylethyl (meth)acrylate, 2-perfluoroethyl-2-perfluorobutylethyl (meth)acrylate, 2-perfluoroethyl (meth)acrylate, perfluoromethyl (meth)acrylate, diperfluoromethylmethyl (meth)acrylate, 2-perfluoromethyl-2-perfluoroethylmethyl (meth)acrylate, 2-perfluorohexylethyl (meth)acrylate, 2-perfluorodecylethyl (meth)acrylate, and 2-perfluorohexadecylethyl (meth)acrylate; styrene based monomers, such as styrene, vinyltoluene, α-methylstyrene, chlorostyrene, and styrenesulfonic acid and its salts; fluorine-containing vinyl monomers, such as perfluoroethylene, perfluoropropylene, and vinylidene fluoride; silicon-containing vinyl monomers, such as vinyltrimethoxysilane and vinyltriethoxysilane; maleic anhydride, maleic acid, and monoalkyl esters and dialkyl esters of maleic acid; fumaric acid and monoalkyl and dialkyl esters of fumaric acid; maleimide based monomers such as maleimide, methylmaleimide, ethylmaleimide, propylmaleimide, butylmaleimide, hexylmaleimide, octylmaleimide, dodecylmaleimide, stearylmaleimide, phenylmaleimide, and cyclohexylmaleimide; nitrile group-containing vinyl monomer, such as acrylonitrile and methacrylonitrile; amido group-containing vinyl monomers, such as acrylamide and methacrylamide; vinyl esters, such as vinyl acetate, vinyl propionate, vinyl pivalate, vinyl benzoate, and vinyl cinnamate; alkenes, such as ethylene and propylene; conjugated dienes, such as butadiene and isoprene; and vinyl chloride, vinylidene chloride, allyl chloride, allyl alcohol and the like.

In the above-mentioned expression manner, for example, the wording (meth)acrylic acid refers to acrylic acid and/or methacrylic acid.

These may be used alone, or plural ones of these may be copolymerized with each other. In particular, from the viewpoint of physical properties of products and others, preferred are styrene based monomers and (meth)acrylic acid based monomers. More preferred are acrylic acid ester monomers and methacrylic acid ester monomers, and particularly preferred are acrylic acid ester monomers. In the present invention, these preferred monomers may each be copolymerized with other monomer(s), and may each be block-copolymerized therewith. The vinyl polymer (I) of the present invention is preferably a polymer produced by polymerizing one or more of these preferred monomers "mainly". Specifically, the preferred monomer (s) is/are contained preferably at a ratio by weight of 60% or more. When a monomer (i) containing a polar functional group (X) and a monomer (ii) containing a functional group (Y), which will be described below, are each a styrene based monomer or a (meth) acrylic acid based monomer, it is advisable that the above-mentioned preferred monomer(s) including the monomer (i) and the monomer (ii) are contained at a ratio by weight of 60% or more.

A number-average molecular weight of the vinyl polymer (I) of the present invention is not particularly limited, but is preferably from 3000 to 1000000, more preferably from 5000 to 500000, in particular preferably from 7000 to 100000.

A molecular weight distribution of the vinyl polymer (I) of the present invention, that is, a ratio of a weight-average molecular weight to a number-average molecular weight, each of the molecular weights being measured by gel permeation chromatography, is not particularly limited, but is preferably less than 1.8, preferably less than 1.7, more preferably less than 1.5, even more preferably less than 1.3. When it is used to synthesize a graft copolymer or the like, there is produced an advantage that controlled side chains can be introduced thereinto. In the GPC measurement in the present invention, chloroform is usually used as a mobile phase therefor. The measurement is made in a polystyrene gel column. The number-average molecular weight and the other may be obtained relative to polystyrene standards.

The vinyl polymer (I) of the invention may be linear or branched.

### <<Group (A) containing a carbon-carbon double bond>>

The group (A) containing a carbon-carbon double bond, which the vinyl polymer (I) of the present invention has at its molecular terminal(s), is not particularly limited, but is in particular preferably a group represented by the following general formula 1:

-OC(O)C(R¹)=CH₂ (1)

wherein R¹ represents a hydrogen atom, or a hydrocarbon group which has 1 to 20 carbon atoms and may have one or two oxygen atoms. The group wherein R¹ is hydrogen or a methyl group is particularly preferred.

The group (A) containing carbon-carbon double bond at the terminal (s) of the polymer of the invention is also preferably a group represented by the following general formula (2):

-R³-C(R²)=CH₂ (2)

wherein R² represents a hydrogen atom, or a hydrocarbon group which has 1 to 20 carbon atoms and may have one or two oxygen atoms, and R³ represents a direct bond or a hydrocarbon group having 1 to 20 carbon atoms. The group wherein R² is hydrogen or a methyl group is particularly preferred. R³ may be linear or branched, and R³ may have a cyclic structure and may contain an aromatic ring.

### <<Method for synthesizing the main chain of the vinyl polymer (I) & Method for introducing the group (A) containing a carbon-carbon double bond>>

The polymerizing method for constructing the main chain of the vinyl polymer (I) of the present invention is not particularly limited, but is preferably radical polymerization, more preferably living radical polymerization, in particular preferably atom transfer radical polymerization. As for radical polymerization, it is generally said that the control thereof is difficult since the polymerization rate is high and termination reaction, due to coupling between radicals or the like, easily occurred. Although living radical polymerization and atom transfer radical polymerization are each radical polymerization, the termination reaction thereof does not easily occur and a polymer having a narrow molecular weight distribution (the value of Mw/Mn is from about 1.1 to 1.5) is obtained. Additionally, the molecular weight can freely be controlled in accordance with the charge ratio between the monomer and the initiator. Accordingly, living radical polymerization makes it possible to yield a polymer having a narrow molecular weight distribution and a low viscosity and further introduce individuals of a monomer having a specific functional group into arbitrary positions in the polymer. Thus, living radical polymerization is preferable as a process for producing the vinyl polymer of the present invention, which has a specific functional group.

In a narrow sense of the term, "living polymerization" means a polymerization in which the molecule grows with its growth termini being constantly activated. Generally, however, the term is used to broadly cover as well a pseudo-living polymerization reaction in which the polymer grows while molecules with an activated terminus and molecules with a deactivated terminus are in equilibrium, and the term as used in this specification also has the latter broad meaning. Regarding this living polymerization, especially atom transfer radical polymerization method, reference can be made to Matyjaszewski et al.: Journal of the American Chemical Society (J. Am. Chem. Soc.), 117, 5614 (1995), Macromolecules, 28, 7901 (1995), Science, 272, 866 (1996), WO 96/30421, WO 97/18247, Sawamoto et al.: Macromolecules, 28, 1721 (1995), JP-A-2000-44626, JP-A-2000-191728 or the like.

When this atom transfer radical polymerization method is used, it is preferred to use, as a catalyst, a transition metal catalyst containing copper as a central metal.

The method for introducing the group (A) containing a carbon-carbon double bond into the terminal (s) of the polymer may be a method known in the prior art, which is described in JP-A-5-255415, JP-A-2000-44626, JP-A-2000-191728, or some other publication. Examples of the method include a method (1) using an alkenyl-group-containing disulfide as a chain transfer agent, a method (2) of adding a "compound having both of an alkenyl group and various functional groups (including the alkenyl group)" at a terminal period of polymerization, a method (3) of substituting a terminal halogen group of a polymer with an alkenyl-group-containing compound and the like.

It is sufficient that the vinyl polymer (I) has the group (A) containing a carbon-carbon double bond at the position of at least one molecular terminal thereof. As for the group (A) containing a carbon-carbon double bond, the number thereof per molecule is not particularly limited, but is preferably from 0.5 to 10. When the vinyl polymer (I) of the present invention is used as a modifier of other polymer (s) and the melt viscosity thereof is desired to be made low, the used vinyl polymer (I) is preferably a polymer wherein the number is from 0.5 to 1.5, more preferably a polymer wherein the number is from 0. 6 to 1.4, even more preferably a polymer wherein the number is from 0.7 to 1.3. When the vinyl polymer (I) of the present invention alone or a polymer made from the vinyl polymer (I) alone is used as a constituting material, or when the vinyl polymer (I) is used as a modifier for other polymer (s) and the polymer (I) is desired to exhibit a reinforcing effect, the used vinyl polymer (I) is preferably a polymer wherein the number is from 1.5 to 2.5, more preferably a polymer wherein the number is from 1.6 to 2.4, even more preferably a polymer wherein the number is from 1.7 to 2.3. When the vinyl polymer (I) is desired to exhibit an especial modifying effect, the used vinyl polymer (I) may be a polymer wherein the number is from 2.5 to 10. As described above, in this case, the main chain of the vinyl polymer (I) may be branched.

### <<Polar functional group (X)>>

The vinyl polymer (I) of the present invention has a polar functional group (X). In this manner, the vinyl polymer (I) of the present invention itself has polarity and further polarity can be given to a block- or graft-form copolymer obtained by use of the vinyl polymer (I) as a macromonomer. Thus, the vinyl polymer (I) becomes effective as a resin modifier or a compatibilizing agent.

The polar functional group (X) is not particularly limited, but examples thereof include a carboxyl group, a hydroxyl group, an epoxy group, an amino group, an amide group, a silyl group, an acetylacetonato group, a mercapto group and the like. Of these groups, a carboxyl group is preferred.
The vinyl polymer (I) of the present invention may have only one of these polar functional groups (X), or two or more thereof.

In the vinyl polymer (I) of the present invention, the content of the polar functional group (X) may be appropriately decided in accordance with required properties, and is not particularly limited. The polar functional group (X) is contained preferably in the number of at least 0.8 per molecule of the vinyl polymer (I). When the polar functional group (X) is used as crosslinking points, the group (X) is contained preferably in the number of 0.8 to 10 per molecule thereof. When the group (X) is used to give polarity or attain some other purpose, the group (X) may be contained in a larger number, that is, the number of more than 10.

It is preferable that a percentage of a constituting unit having the polar functional group (X) in constituting units which originate from a monomer constituting the main chain of the vinyl polymer is from 1 to 100% by mol. When the group (X) is used as crosslinking points, the percentage is preferably from 1 to 5% by mol. When the polar functional group (X) is used to give polarity or attain some other purpose, the percentage may be preferably a larger value, that is, a value more than 5% by mol. Moreover, all the monomers which constitute the main chain, that is, 100% by mole of the monomers may contain the polar functional group (X).

Individuals of the polar functional group (X) are each not particularly limited about their positions, but the individuals may be partially or wholly at one or more molecular terminals or in the molecular chain. When the individuals are present in the molecular chain, they may be located at random or arranged in a block or gradient form.

### <<Method for introducing the polar functional group (X)>>

A method for introducing the polar functional group (X) into the vinyl polymer is not particularly limited, but examples thereof include the following four methods (1) to (4), which may be conducted each independently or in combination:
(1) A method of copolymerizing a monomer (i) containing the polar functional group (X) when the main chain of the vinyl polymer (I) is constructed.
(2) A method of copolymerizing a monomer (ii) containing a functional group (Y) when the main chain of the vinyl polymer (I) is constructed, so as to yield a vinyl polymer; and then converting the functional group (Y) to the polar functional group (X).
(3) A method of using an initiator containing the polar functional group (X) when the main chain of the vinyl polymer (I) is constructed.
(4) A method of using an initiator containing a functional group (Y) when the main chain of the vinyl polymer (I) is constructed, so as to yield a vinyl polymer; and then converting the functional group (Y) to the polar functional group (X).

First, the method (1) is described.

The polar functional group (X) of the polar-functional-group-(X)-containing monomer (i) used in the method (1) may be identical with the polar functional group (X) of the above-mentioned vinyl polymer (I).

When the polar functional group (X) is introduced in the method (1), the monomer (i) is not particularly limited but is preferably a vinyl monomer containing the polar functional group (X). The following can be preferably used: a monomer represented by the following general formula 5:

CH₂=C (R⁷)-R⁸-R⁹-X (5)

wherein R⁷ represents a hydrogen atom or a hydrocarbon group which has 1 to 20 carbon atoms and may have one or two oxygen atoms, and R⁸ and R⁹ each represent a direct bond or a hydrocarbon group which has 1 to 20 carbon atoms and may have one or two oxygen atoms, and may be the same as or different from each other.

Preferably, the following monomers can be favorably used:
a monomer represented by the following formula:

   CH₂=C(R⁷)-C(O)-O-R⁹-X,

   CH₂=C(R⁷)-C₆Hₘ(R¹⁰)₄₋ₘ-R⁹-X,

   or

   CH₂=C(R⁷)-(CH₂)ₙ-X
wherein R⁷ and R⁹ are the same as described above, R¹⁰ is a hydrogen atom or a hydrocarbon group which has 1 to 20 carbon atoms and may have one or two oxygen atoms, m is an integer of 0 to 4, and n is an integer of 0 to 20.

More preferably, the following monomers can be favorably used: a monomer represented by the following formula:

CH₂=C(R⁷)-C (O)-O-(CH₂)ₙ-X,

CH₂=C(R⁷)-C₆Hₘ(R¹⁰)₄₋ₘ-(CH₂)ₙ-X,

or

CH₂=C(R⁷)-(CH₂)ₙ-X

wherein R⁷, R¹⁰, m and n are the same as described above.

Specific examples thereof include:
(meth)acrylic acid, carboxymethyl (meth)acrylate, carboxyethyl (meth)acrylate, carboxyphenyl (meth)acrylate, hydroxymethyl (meth)acrylate, hydroxyethyl (meth)acrylate, hydroxyphenyl (meth)acrylate, glycidyl (meth)acrylate, aminomethyl (meth)acrylate, aminoethyl (meth)acrylate, aminophenyl (meth)acrylate, (meth)acrylamide, dimethoxymethylsilylpropyl (meth)acrylate, acetoacetoxyethyl (meth)acrylate, mercaptoethyl (meth)acrylate, carboxystyrene (vinylbenzoic acid), hydroxystyrene (vinylphenol), glycidylstyrene, aminostyrene (vinylaniline), dimethoxymethylsilylstyrene, mercaptostyrene, butenoic acid (crotonic acid), pentenoic acid, hexenoic acid, allyl alcohol, butenol, pentenol, hexenol, epoxybutene (butadiene monooxide), epoxyhexene, epoxydecene and the like.

Next, the method (3) is described.

The polar functional group (X) of the polar-functional-group-(X)-containing initiator used in the method (3) may be identical with the polar functional group (X) of the above-mentioned vinyl polymer (I). The used initiator is not particularly limited as far as the initiator contains a polar functional group (X), but may be an initiator known in the prior art, which is described in JP-A-2000-44626, JP-A-2000-191728, the pamphlet of International Publication WO99/65963 or the like.

Examples of the initiator that can be used in atom transfer radical polymerization, which is a preferred embodiment, include

Xᵣ-C₆H₍₅₋ᵣ₎-CH₂Q,

XᵣC₆H₍₅₋ᵣ₎-C(H) (Q)CH₃,

and

Xᵣ-C₆H₍₅₋ᵣ₎-C(Q) (CH₃)₂

wherein X represents a polar functional group (X), C₆H₅ represents a phenyl group, Q represents chlorine, bromine, or iodine, and r represents an integer of 1 to 5;

R¹⁵-C(H)(Q)-CO₂R¹⁶,

R¹5-C(CH₃)(Q)-CO₂R¹⁶,

R¹⁵-C(H) (Q)-C (O)R¹⁶,

and

R¹⁵-C(CH₃)(Q)-C (O)R¹⁶

wherein R¹⁵ and R¹⁶ are each a hydrogen atom or an alkyl group, aryl group or aralkyl group which has 1 to 20 carbon atoms and may contain a polar functional group (X), and Q is chlorine, bromine or iodine; and

(R¹⁵-)(X-)ₛC₆H₍₄₋ₛ₎-SO₂Q

wherein R¹⁵ is a hydrogen atom or an alkyl, aryl or aralkyl group which has 1 to 20 carbon atoms and may contain a polar functional group (X), Q is chlorine, bromine or iodine, and s represents an integer of 1 to 4.

When a monofunctional initiator containing the polar functional group (X) is used, the polar functional group (X) can be introduced into an initiator segment of the vinyl polymer (I), that is, a (single) terminal of the molecular chain thereof.

In the methods (1) and (3), that is, the method of copolymerizing the polar-functional-group-(X)-containing monomer (i) and the method using the polar-functional-group-(X)-containing initiator, the polar functional group (X) may interact on a growing point of the polymer or a catalyst for the polymerization in accordance with the kind of the polar functional group (X) or the method for the polymerization, so that an inconvenience may be caused for the polymerization. In this case, for example, the catalyst may be inactivated so that the rate of the polymerization may decrease, the molecular weights of the resultant polymer molecules may become uneven, or the growing point of the polymer, the polar functional group (X) and others may be inactivated.

Against such cases, according to the method (2) or (4), the vinyl polymer (I) of the invention is effectively obtained.

In the method (2) or (4) in the present invention, instead of introducing the polar functional group (X) directly into the polymer, a protected functional group (Y), which may be referred to as the "protective group (Y) " hereinafter, may be introduced into the polymer; after the polymerization, in the case of de-protecting the functional group (Y), that is, converting the functional group (Y) to the polar functional group (X), the vinyl polymer (I) can be effectively yielded. According to this method (2), the vinyl polymer (I) of the present invention can be produced with good controllability and stability regardless of the kind of the polar functional group (X) or the polymerization method. The wording "protective" means that the functional group which has a high reactivity (polar functional group (X)) is converted to a functional group inactive onto subsequent reaction. The functional group is referred to as a protective group. The wording "being de-protected" means that after required reaction is ended, from the protected functional group, the protection is removed by conducting an appropriate reaction.

In the method (2), a monomer (ii) containing a functional group (Y) (protective group (Y)) is copolymerized to produce a vinyl polymer into which the functional group (Y) is introduced.

The functional group (Y) for the polar functional group (X) is not particularly limited, but may be selected from functional groups known in the prior art, which are described in Jeremy Robertson "Protecting Group Chemistry (Oxford Chemistry Primers)" (Oxford Univ Pr(Sd)) (2000/08/03), Theodora W. Greene, & Peter G. M. Wuts "Protective Groups in Organic Synthesis" (Wiley-Interscience) 3rd edition (1999/05/15), "Organic Synthesis Handbook", edited by the Society of Synthetic Organic Chemistry, Japan (Maruzen) (1990/03/31) or the like.

When the polar functional group (X) is, for example, a carboxyl group, the functional group (Y) is preferably a group represented by the following general formula 3:

-C(O)-O-Z (3)

wherein Z is represented by the following general formula 4:

-Cₓ(R⁴)(R⁵)(R⁶) (4)

wherein Cₓ represents a carbon atom or a silicon atom, R⁴ to R⁶ each represent a hydrocarbon group having 1 to 20 carbon atoms, may be the same or different, and may be independently of each other or bonded to each other.

Examples of Z in the formula (3) representing the functional group (Y) include a methyl group, a t-butyl group, an isobornyl group, a norbornyl group, an adamanthyl group, a triphenylmethyl group (a trityl group), a trimethylsilyl group, a benzyl (-CH₂C₆H₅) group and the like. Preferred is a t-butyl group, an isobornyl group, a norbornyl group, an adamanthyl group, a triphneylmethyl group, a trimethylsilyl group or the like.

When the polar functional group (X) is a hydroxyl group, the functional group (Y) may be

-OG

wherein G is a methyl group, a triphenylmethyl (a trityl group) group, a t-butyl group, a benzyl group, a methoxybenzyl group, a trialkylsilyl group such as a trimethylsilyl group, a tetrahydropyranyl group, an acetyl group, a benzoyl group or the like.

When the polar functional group (X) is an amino group, the functional group (Y) may be
-NHG, -NRG or -NG₂
wherein G is a formyl group (-CHO), an acetyl group (-COCH₃), a trifluoroacetyl group (-COCF₃), a benzoyl group (-COC₆H₅), a benzyl group (-CH₂C₆H₅), a methoxycarbonyl group (-C(O)-OCH₃), a t-butoxycarbonyl group (-C(O)-OC(CH₃)₃), a toluenesulfonyl group (a tosyl group: -SO₂C₆H4-p-CH₃) or the like.

The monomer (ii) is not particularly limited as far as the monomer is a monomer having a functional group (Y) as described above, but is preferably a vinyl monomer containing a functional group (Y). The following monomer can be preferably used: a monomer represented by the following general formula 6:

CH₂=C(R¹¹)-R¹²-R¹³-Y (6)

wherein R¹¹ represents a hydrogen atom or a hydrocarbon group which has 1 to 20 carbon atoms and may have one or two oxygen atoms, and R¹² and R¹³ each represent a direct bond or a hydrocarbon group which has 1 to 20 carbon atoms and may have one or two oxygen atoms, and may be the same or different.

Preferably, the following monomer can be favorably used: a monomer represented by the following formula:

CH₂=C(R¹¹)-C(O)-O-R¹³-Y,

CH₂=C (R¹¹)-C₆Hₘ(R¹⁴)₄₋ₘ-R¹³-Y,

or

CH₂=C(R¹¹)-(CH₂)ₙ-Y

wherein R¹¹ and R¹³ are the same as described above, R¹⁴ is a hydrogen atom or a hydrocarbon group which has 1 to 20 carbon atoms and may have one or two oxygen atoms, m is an integer of 0 to 4, and n is an integer of 0 to 20.

More preferably, the following monomer can be favorably used: a monomer represented by the following formula:

CH₂=C(R¹¹)-C (O)-O-(CH₂)ₙ-Y,

CH₂=C(R¹¹)-C₆Hₘ(R¹⁴)₄₋ₘ-(CH₂)ₙ-Y,

or

CH₂=C(R¹¹)-(CH₂)ₙ-Y

wherein R¹¹, R¹⁴, m and n are the same as described above.

When the polar functional group (X) is, for example, a carboxyl group, specifically, the following can be preferably used as the monomer (ii): t-butyl (meth)acrylate, isobornyl methacrylate, norbornyl (meth)acrylate, adamanthyl (meth)acrylate, triphenylmethyl (meth)acrylate, trimethylsilyl (meth) acrylate, benzyl (meth)acrylate, or the like. When such a monomer is used as the monomer (ii), the de-protection can be selectively attained, that is, the functional group (Y) can be converted to the polar functional group (X) under relatively mild conditions after the polymerization.

In the method (2), the conversion of the functional group (Y) to the polar functional group (X) may be applied to the vinyl polymer obtained by copolymerizing the functional-group- (Y) -containing monomer (ii) in the state that the solution of the polymer is present as it is or after the polymer solution is subjected to various steps for purification and others. The conversion of the functional group (Y) to the polar functional group (X) (de-protection) may be conducted in the state that only the vinyl polymer obtained by copolymerizing the functional-group-(Y)-containing monomer (ii) is present, or the conversion may be conducted in the presence of a different compound (III).

The compound (III) is not particularly limited, and examples thereof include a resin, a solvent, a plasticizer, a compatibilizing agent, a filler, physical property adjustors such as an adhesive agent or a thixotropic agent (anti-sagging agent), an emulsifier, a surfactant, a dispersing agent, an antifoaming agent, an antifogging agent, a solubilizer, a thickener, a lubricant, a flame-retardant, a curability adjustor, a metal inactivating agent, an antiozonant, a phosphorus-containing peroxide decomposer, a lubricant, a pigment, a colorant, a foaming agent, a polymerization inhibitor, an antioxidant, an age resistor, and a light-resistant stabilizer and the like. Examples of the resin include polyolefin resin; ethylene or α-olefin/vinyl monomer copolymers such as ethylene/styrene copolymer, ethylene/methylstyrene copolymer, ethylene/divinylbenzene copolymer and the like; polydiene copolymers such as polybutadiene, polyisoprene and the like; vinyl monomer/diene monomer random copolymers such as styrene/butadiene random copolymer and the like; vinyl monomer/diene monomer/vinyl monomer block copolymers such as styrene/butadiene/styrene block copolymer and the like; hydrogenated (vinyl monomer/diene monomer random copolymers) such as hydrogenated (styrene/butadiene random copolymer) and the like; hydrogenated (vinyl monomer/diene monomer/vinyl monomer random copolymers) such as hydrogenated (styrene/butadiene/styrene random block copolymer) and the like; vinyl monomer/diene monomer/vinyl monomer graft copolymers such as acrylonitrile/butadiene/styrene graft copolymer, methyl methacrylate/butadiene/styrene graft copolymer and the like; vinyl polymers such as polyvinyl chloride, polyvinylidene chloride, polyacrylonitrile, polyvinyl acetate, poly(meth)acrylate, polystyrene and the like; vinyl copolymers such as vinyl chloride/acrylonitrile copolymer, vinyl chloride/vinyl acetate copolymer, acrylonitrile/styrene copolymer, methyl methacrylate/styrene copolymer and the like; and polycarbonate resin, polyester resin, a mixture of polycarbonate resin and polyester resin, polyether resin, polyphenylene ether resin, and a mixture of polystyrene resin and polyphenylene ether resin. Examples of the polyolefin resin include polyethylene; polypropylene; poly α-olefins such as polybutene-1, polyisobutene, polypentene-1, polymethylpentene-1 and the like; ethylene or α-olefin/α-olefin copolymers such as ethylene/propylene copolymer wherein the content by percentage of propylene is less than 75% by weight, ethylene/butene-1 copolymer, propylene/butene-1 copolymer wherein the content by percentage of propylene is less than 75% by weight and the like; and ethylene or α-olefin/α-olefin/diene monomer copolymers such as ethylene/propylene/5-ethylidene-2-norbornene copolymer
wherein the content by percentage of propylene is less than 75% by weight. Other examples are acid-modified polypropylenes such as maleic anhydride modified polypropylene, maleic acid modified polypropylene, acrylic acid modified polypropylene and the like; a-olefin/polar-group-containing vinyl monomer copolymers such as ethylene/vinyl chloride copolymer, ethylene/vinylidene chloride copolymer, ethylene/acrylonitrile copolymer, ethylene/methacrylonitrile copolymer, ethylene/vinyl acetate copolymer, ethylene/acrylamide copolymer, ethylene/methacrylamide copolymer, ethylene/acrylic acid copolymer, ethylene/methacrylic acid copolymer, ethylene/maleic acid copolymer, ethylene/ethyl acrylate copolymer, ethylene/butyl acrylate copolymer, ethylene/methyl methacrylate copolymer, ethylene/maleic anhydride copolymer, ethylene/acrylic acid metal salt copolymer, ethylene/methacrylic acid metal salt copolymer and the like; and chlorinated polyolefins such as chlorinated polyethylene, chlorinated polypropylene and the like.

Examples of the solvent include hydrocarbon solvents such as benzene, toluene and the like; ether solvents such as diethyl ether, tetrahydrofuran and the like; halogenated hydrocarbon solvents such as methylene chloride, chloroform and the like; ketone solvents such as acetone, methyl ethyl ketone, methyl isobutyl ketone and the like; alcohol solvents such as methanol, ethanol, propanol, isopropanol, n-butyl alcohol, t-butyl alcohol and the like; nitrile solvents such as acetonitrile, propionitrile, benzonitrile and the like; ester solvents such as ethyl acetate, butyl acetate and the like; and carbonate solvents such as ethylene carbonate, propylene carbonate and the like, and the like. These may be used alone or in the form of a mixture of two or more thereof.

In the method (2), the conversion method of the functional group (Y) to the polar functional group (X) is not particularly limited, but may be a method based on heat, or a method of adding a catalyst.
When the conversion is conducted by the method based on heat, the temperature at which the functional group (Y) is converted to the polar functional group (X) is not particularly limited, but is preferably 50°C or higher in order to shorten the time required for the conversion of the functional group (Y) to the polar functional group (X). The temperature at the time of this conversion may be set to 100°C or higher, 150°C or higher, or 200°C or higher. The temperature may be appropriately decided, considering the thermal stability of the polar functional group (X), the functional group (Y) the vinyl polymer (I) and the like.

When the functional group (Y) is converted to the polar functional group (X), various catalysts, which are not particularly limited, may be added. For example, when the polar functional group (X) is a carboxyl group (-COOH) and the functional group (Y) is -C(O)-OC(CH₃)₃, the conversion is conducted preferably in the presence of an acid catalyst. Examples of the acid catalyst include inorganic acids such as hydrochloric acid, sulfuric acid, nitric acid, phosphoric acid and the like; organic acids such as acetic acid, propionic acid, oxalic acid, malonic acid, maleic acid, citric acid, benzoic acid, p-toluenesulfonic acid, benzenesulfonic acid and the like; H⁺ type ion exchange resins such as a sulfonic acid type resin and the like, and the like. In this case, an amount of the catalyst is not particularly limited, but is preferably from 0.0001 to 50 parts by weight, more preferably from 0.001 to 20 parts by weight, even more preferably from 0.01 to 10 parts by weight, in particular preferably from 0.1 to 5 parts by weight for 100 parts by weight of the vinyl polymer (I) into which the functional group (Y) is introduced. If the catalyst amount is smaller, the conversion of the functional group (Y) to the polar functional group (X) may become insufficient. If the catalyst amount is larger, side reaction may be caused or an excess of the catalyst may not be easily removed.

Next, the method (4) is described.

The functional group (Y) of the functional-group-(Y)-containing initiator used in the method (4) may be identical with the functional group (Y) described in the above-mentioned (2). The used initiator is not particularly limited as far as the initiator has a functional group (Y), but may be an initiator known in the prior art, which is described in JP-A-2000-44626, JP-A-2000-191728, the pamphlet of International Publication WO99/65963 or the like, or an initiator wherein any polar functional group (X) contained therein is protected so as to be turned to a functional group (Y).

Examples of the initiator that can be used in atom transfer radical polymerization, which is a preferred embodiment, include

Yᵣ-C₆H₍₅₋ᵣ₎-CH₂Q,

Yᵣ-C₆H₍₅₋ᵣ₎-C(H)(Q)GH₃,

and

Yᵣ-C₆H₍₅₋ᵣ₎-C(Q)(CH₃)₂

wherein Y represents a protective group (Y), C₆H₅ represents a phenyl group, Q represents chlorine, bromine or iodine, and r represents an integer of 1 to 5;

R¹⁵-C(H)(Q)-Y,

R¹⁵-C(H)(Q) -CO₂R¹⁶,

R¹⁵-C(CH₃)(Q) -CO₂R¹⁶,

R¹⁵-C(H)(Q)-C(O)R¹⁶,

and

R¹⁵-C(CH³)(Q)-C(O)R¹⁶

wherein R¹⁵ and R¹⁶ are each a hydrogen atom or an alkyl group, an aryl group or an aralkyl group which has 1 to 20 carbon atoms and may contain a protective group (Y), and Q is chlorine, bromine or iodine; and

(R¹⁵-)(Y-)₅C₆H₍₄₋ₛ₎-SO₂Q

wherein R¹⁵ is a hydrogen atom or an alkylgroup, an aryl group or an aralkyl group which has 1 to 20 carbon atoms and may contain a protective group (Y), Q is chlorine, bromine or iodine, and s represents an integer of 1 to 4.

The de-protection after the polymerization, that is, the conversion of the polar functional group (X) to the functional group (Y) may be conducted in the same way as described in the (2).

Furthermore, when the functional-group-(Y)-containing initiator, which is monofunctional, is used to conduct the polymerization and then the de-protection is conducted, the polar functional group (X) can be introduced into an initiator segment of the vinyl polymer (I), that is, a (single) terminal of the molecular chain thereof.

The use amount of the polar-functional-group-(X)-containing monomer (i) and/or the functional-group-(Y)-containing monomer (ii) is not particularly limited, but may be from 0.01 to 100% by mole of the monomers which constitute the main chain of the vinyl polymer (I), and is more preferably from 0.1 to 100% by mole thereof, even more preferably from 1 to 100% by mole thereof. However, the polar functional group (X) and/or the functional group (Y) is/are contained in the number of 0.8 or more per molecule of the vinyl polymer (I).

### <<Usage>>

The vinyl polymer of the present invention has a group (A) having a carbon-carbon double bond at its molecular terminal and further has a polar functional group (X); therefore, the vinyl polymer (I) is useful as a macromonomer. Moreover, the vinyl polymer of the present invention is used alone or in the form of a block-form or graft-form copolymer obtained by causing the vinyl polymer (I) to react with other monomer(s) and/or polymer(s); in this case, the vinyl polymer is suitable as a resin modifier or a compatibilizing agent. Furthermore, the vinyl polymer (I) of the present invention is also used suitably as a surfactant, an emulsifier or a dispersion stabilizer since the vinyl polymer has the polar functional group (X).

The vinyl polymer (I) of the present invention can be turned to a curable composition by itself or by blending with various additives, though the way of turning the vinyl polymer is not particularly limited. The additive blended for adjusting the physical property is not particularly limited, and may be, for example, a filler, a plasticizer, an age resistor, a pigment, a physical property adjustor, a solvent or the like.

The usage of the thus-obtained curable composition is not limited, and the curable composition may be used for the following various articles or purposes: electric/electronic components (a sealant for heavy electrical component, light electrical component, circuit in an electric/electronic instrument, or substrate (a sealant for refrigerator, freezer, washing machine, gas meter, microwave oven, steam iron, or electric leakage breaker); a potting material (potting of a transformer high-voltage circuit, a printed board, a variable-resistor-attached high-voltage transformer, an electrical insulating component, a semiconductive component, an electroconductive component, a solar cell or a flyback transformer for television); a coating material (coating of a high-voltage thick layer resistor or a circuit element of a hybrid IC, an HIC, an electrical insulating component, a semiconductive component, an electroconductive component, a module, a printed circuit, a ceramic substrate, a buffer material for diode, transistor or bonding wire, a semiconductor element, or an optical fiber for optical communication); a resist material (such as a semiconductor resist, a liquid solder resist, an electrodeposition resist, a dry film resist, a photoresist for liquid crystal, a permanent resist or the like) or an adhesive agent (adhesion of a wedge of a cathode-ray tube, a neck, an electrical insulating component, a semiconductive component, or an electroconductive component); a repairing material of an electric wire coating; an insulating sealant of an electric wire jointing component; an OA instrument roll; a vibration absorbent; or an inclusion of gel or a condenser); automobile components (a sealant for gasket of a car engine, electric component, or oil filter; a butting material for ignitor HIC or car hybrid IC; a coating material for car body, car window glass, or engine control board; an adhesive agent for gasket of an oil pan, gasket of a timing belt cover, mall, head lamp lens, sunroof seal, or mirror; and an O ring for fuel injection system, fuel heating system, air damper, pressure detecting device, oil cooler of a resin tank for heat exchanger, variable compression ratio engine, cylinder system, regulator for compressed natural gas, pressure vessel, or fuel supplying system or high-pressure pump of an in-cylinder direct injection type combustion engine; ships (a sealant for wiring connecting/branching box, electric system component, or electric wire; or an adhesive agent for electric wire or glass); aircrafts or railway vehicles; civic engineering and architecture (a sealant for building material which is used in a butting joint for glass screen method for commercial building, a glass-surrounding joint to a window sash, an interior joint for toilet, washroom, or showcase; a bathtub-surrounding joint, an outer wall stretching and shrinking joint for prefabricated house, or a joint for siding board; a sealant for glass lamination; a sealant for civic engineering that is used to repair a road; a paint or adhesive agent for metal, glass, stone material, slate, concrete or roofing tile; or an adhesive sheet, a waterproof sheet, a vibration proof sheet; medical care (a sealant for medical rubber stopper, syringe gasket or pressure-reducing rubber stopper for blood vessel) ; leisure (a swimming member for swimming cap, diving mask or earplug; or a gel buffer member for short shoes or baseball glove) and the like.

A further property may be given to the vinyl polymer (I) of the present invention or a composition using this polymer by crosslinking or modifying the polymer, using a polar functional group (X).

### Examples

Specific examples of the present invention will be described hereinafter. However, the present invention is not limited to the examples. In the examples, the word "part(s)" and the symbol "%" represent "part(s) by weight" and "% by weight", respectively. Any "a number-average molecular weight" and any "a molecular weight distribution (the ratio between weight-average molecular weight and number-average molecular weight)" were each calculated out by a standard polystyrene conversion method using gel permeation chromatography (GPC). The GPC column and the GPC solvent used therefor were a column into which crosslinked polystyrene gel was filled (shodex GPC K-804, manufactured by Showa Denko K.K.), and chloroform, respectively. The number of any functional group introduced per molecule of a polymer was calculated out on the basis of its concentration analysis by ¹H-NMR and the number-average molecular weight obtained by GPC.

The NMR spectroscopy was performed using a Bruker ASX400 spectrometer with deuterochloroform as a solvent at 23°C.

### (Example 1)

Charged were 10 parts of t-butyl acrylate, 30 parts of n-butyl acrylate, 0.42 part of copper (I) bromide, and 8.8 parts of acetonitrile, and the mixture was stirred under a nitrogen atmosphere at 80°C. Thereto were added 1.9 parts of ethyl 2-bromobutyrate, and the resultant solution was further stirred at 80°C. Thereto was added 0.034 part of pentamethyldiethylenetriamine (hereinafter referred to as triamine) to start reaction. During the course of the reaction, thereto were intermittently added 60 parts of n-butyl acrylate, and further thereto was appropriately added triamine. While the additions were carried out, the reaction solution was continuously heated and stirred so as to set the temperature of the reaction solution into the range of 80 to 90°C. After 97% of n-butyl acrylate was reacted, volatile materials in the reaction solution were removed under reduced pressure.
This was diluted with toluene, and thereto were added synthetic hydrotalcite, aluminum silicate, and a filter aid. The solution was then heated and stirred in the atmosphere of oxygen/nitrogen mixed gas. Solid materials were removed therefrom and then the solution was concentrated. This was diluted into N,N-dimethylacetoamide. The resultant was heated and stirred at 70°C for 7 hours in the co-presence of potassium acrylate. After the concentration, the solution was diluted with toluene and then solid materials were removed therefrom. This was concentrated to yield a polymer [1-a]. The number-average molecular weight of the polymer [1-a] was 12000, and the molecular weight distribution was 1.1. An acryloyl group was introduced in the number of 1.0 per molecule of the polymer.
To 100 parts of this polymer [1-a] were added 100 parts of toluene and 2 parts of p-toluenesulfonic acid. The resultant was heated and stirred at 100°C for 2 hours. This was filtrated and volatile materials were removed therefrom. This way gave a polymer [1-b] having a polar functional group (a carboxyl group) and having, at a (single) terminal of the molecule thereof, a group having a carbon-carbon double bond (an acryloyl group). The number-average molecular weight of the polymer [1-b] was 9800, and the molecular weight distribution was 1.2. The acryloyl group was introduced in the number of 1.0 per molecule of the polymer.
It was verified by ¹H-NMR that the moiety originating from n-butyl acrylate in the polymer [1-b] was not varied from that in the polymer [1-a] . Next, it was verified by ¹³C-NMR that a signal (at 28 ppm) of the methyl group of a t-butyl group, which was present in the polymer [1-a], disappeared in the polymer [1-b] . Furthermore, it was verified that the polymer [1-b] had a carboxyl group as follows:
The polymer [1-b] was dissolved in chloroform, and then diazomethane, which was separately generated, was added to the solution. The solution was stirred. Volatile materials of this system were removed under reduced pressure, and then the solution was dissolved in deuterochloroform so as to be analyzed by ¹H-NMR. As a result, a signal originating from a -COOCH₃ group was observed at 3.6 ppm. In the present system, diazomethane reacted selectively with only any -COOH group (a carboxyl group), so as to generate a -COOCH₃ group; therefore, it was demonstrated that the polymer [1-b] had a carboxyl group. Furthermore, the amount of the carboxyl group in the polymer [1-b] was calculated out from the integration value of the -COOCH₃ group. As a result, the amount was 10% by mole of all the acrylic units. This value was consistent with the amount of t-butyl acrylate used to synthesize the polymer [1-a].
These matters demonstrate that in the polymer [1-b], the -COOC(CH₃)₃ group in the polymer [1-a] was quantitatively converted to a carboxyl group.
Individuals of the carboxyl group in the polymer [1-a] were arranged in a gradient form in the main chain. This was based on a matter that t-butyl acrylate was charged in a lump at the time of the start of the polymerization. In the resultant polymer, the individuals of the carboxyl group were arranged largely at the initiator segment side of the polymer.
The polymer [1-a] was hardly dissolved in water, but the polymer [1-b] was dissolved in water under a basic condition. This was based on the polymer [1-b] had the carboxyl group.

### (Comparative Example 1)

Charged were 20 parts of n-butyl acrylate, 0.42 part of copper (I) bromide, and 8.8 parts of acetonitrile, and the mixture was stirred under a nitrogen atmosphere at 80°C. Thereto were added 1.9 parts of ethyl 2-bromobutyrate, and the resultant solution was further stirred at 80°C. Thereto was added 0.034 part of pentamethyldiethylenetriamine (hereinafter referred to as triamine) to start reaction. During the course of the reaction, thereto were intermittently added 80 parts of n-butyl acrylate, and further thereto was appropriately added triamine. While the additions were carried out, the reaction solution was continuously heated and stirred so as to set the temperature of the reaction solution into the range of 80 to 90°C. After 95% of n-butyl acrylate was reacted, volatile materials in the reaction solution were removed under reduced pressure.
This was diluted with toluene, and thereto were added synthetic hydrotalcite, aluminum silicate, and a filter aid. The solution was then heated and stirred in the atmosphere of oxygen/nitrogen mixed gas. Solid materials were removed therefrom and then the solution was concentrated. This was diluted into N,N-dimethylacetoamide. The resultant was heated and stirred at 70°C for 3 hours in the co-presence of potassium acrylate. After the concentration, the solution was diluted with toluene and then solid materials were removed therefrom. This was concentrated to yield a comparative polymer [1]. The number-average molecular weight of the comparative polymer [1] was 11000, and the molecular weight distribution was 1.1. An acryloyl group was introduced in the number of 0. 9 per molecule of the polymer.
The comparative polymer [1] was hardly dissolved in water.

### (Example 2)

Mixed were sufficiently 2 parts of t-butyl acrylate, and 98 parts of n-butyl acrylate to prepare 100 parts of a monomer mixture. Charged were 40 parts out of this monomer mixture, 0.42 part of copper (I) bromide, and 8.8 parts of acetonitrile, and then the solution was stirred at 80°C under a nitrogen atmosphere. Thereto were added 1.8 parts of diethyl 2,5-dibromoadipate, and further the solution was stirred at 80°C. Thereto was added 0.034 part of pentamethyldiethylenetriamine (hereinafter referred to as triamine) to start reaction.
During the course of the reaction, thereto were intermittently added 60 parts of the rest of the monomer mixture, and further thereto was appropriately added triamine. While the additions were carried out, the reaction solution was continuously heated and stirred so as to set the temperature of the reaction solution into the range of 80 to 90°C. After 95% of n-butyl acrylate was reacted, volatile materials in the reaction solution were removed under reduced pressure. The total addition amount of triamine was 0.15 part.

This was diluted with toluene, and thereto were added synthetic hydrotalcite, aluminum silicate, and a filter aid. The solution was then heated and stirred in the atmosphere of oxygen/nitrogen mixed gas. Solid materials were removed therefrom and then the solution was concentrated. This was diluted into N,N-dimethylacetoamide. The resultant was heated and stirred at 70°C for 7 hours in the co-presence of potassium acrylate. After the concentration, the solution was diluted with toluene and then solid materials were removed therefrom. Thereto were added 100 parts of toluene and 2 parts of p-toluenesulfonic acid, and then the solution was heated and stirred at 100°C for 2 hours. This was filtrated and then volatile materials were removed therefrom to yield a polymer [2].

The polar functional group (a carboxyl group) quantity of the polymer [2] was calculated out in the same way as in Example 1. As a result, the polymer had, in the main chain thereof, 2% by mole of the polar functional group (a carboxyl group) and further had, at both terminals of the molecule, a group having a carbon-carbon double bond (an acryloyl group).
The number-average molecular weight of the polymer [2] was 22900, and the molecular weight distribution was 1.1. The acryloyl group was introduced in an average number of 1.6 per molecule of the polymer.

### (Comparative Example 2)

Mixed were sufficiently 2 parts of acrylic acid, and 98 parts of n-butyl acrylate to prepare 100 parts of a monomer mixture. Thereafter, the same operations as in Example 2 were conducted. However, the monomers were hardly consumed although triamine was added up to a total amount of 0.15 part (the total addition amount in Example 2). Moreover, the monomers were hardly consumed although triamine was added up to a total amount of 0.30 part (twice the total addition amount in Example 2). The conversion was less than 10%, and no polymer was obtained.
Under the conditions in Comparative Example 2, atom transfer radical polymerization hardly occurred so that no polymer was obtained. On the other hand, as in Example 2, a monomer having a protective group was used to conduct atom transfer radical polymerization and then de-protection was conducted, thereby making it possible to yield conveniently a polymer having a polar functional group (a carboxyl group) and having at its molecular terminal(s) a group having a carbon-carbon double bond (an acryloyl group). As is evident from this matter, according to the production process of the present invention, a polymer having an acidic polar functional group and having at its molecular terminal(s) a group having a carbon-carbon double bond can easily be produced as desired although the polymer has not easily been produced hitherto. Furthermore, a polymer wherein the structure, the molecular weight distribution and others are controlled can also be produced.

### (Example 3)

Mixed were sufficiently 10 parts of t-butyl acrylate, and 90 parts of n-butyl acrylate to prepare 100 parts of a monomer mixture. Charged were 40 parts out of this monomer mixture, 0.42 part of copper (I) bromide, and 8.8 parts of acetonitrile, and then the solution was stirred at 80°C under a nitrogen atmosphere. Thereto were added 1.9 parts of ethyl 2-bromobutyrate, and further the solution was stirred at 80°C. Thereto was added 0.034 part of pentamethyldiethylenetriamine (hereinafter referred to as triamine) to start reaction.
During the course of the reaction, thereto were intermittently added 60 parts of the rest of the monomer mixture, and further thereto was appropriately added triamine. While the additions were carried out, the reaction solution was continuously heated and stirred so as to set the temperature of the reaction solution into the range of 80 to 90°C. After 95% of n-butyl acrylate was reacted, volatile materials in the reaction solution were removed under reduced pressure.
This was diluted with toluene, and thereto were added synthetic hydrotalcite, aluminum silicate, and a filter aid. The solution was then heated and stirred in the atmosphere of oxygen/nitrogen mixed gas. Solid materials were removed therefrom and then the solution was concentrated. This was diluted into N,N-dimethylacetoamide. The resultant was heated and stirred at 70°C for 7 hours in the co-presence of potassium acrylate. After the concentration, the solution was diluted with toluene and then solid materials were removed therefrom. Thereto were added 100 parts of toluene and 2 parts of p-toluenesulfonic acid, and then the solution was heated and stirred at 100°C for 2 hours. This was filtrated and then volatile materials were removed therefrom to yield a polymer [3].
The polar functional group (a carboxyl group) quantity of the polymer [3] was calculated out in the same way as in Example 1. As a result, the polymer had, in the main chain thereof, 10% by mole of the polar functional group (a carboxyl group) and further had, at the terminal (s) of the molecule, a group having a carbon-carbon double bond (an acryloyl group).
The number-average molecular weight of the polymer [3] was 10100, and the molecular weight distribution was 1.2. The acryloyl group was introduced in an average number of 0.7 per molecule of the polymer.
Individuals of the carboxyl group in the polymer [3] were located at random in the main chain. This was based on the matter that t-butyl acrylate was charged at an even blend percentage from the start of the polymerization to the end of the polymerization. In the resultant polymer, individuals of the carboxyl group were located evenly in the main chain.

### (Properties of the polymer [3])

The polymer [3] was dissolved in water under a basic condition. One part of the polymer [3] was added to 100 parts of water and 10 parts of methyl methacrylate so that a homogeneous emulsion was yielded. Furthermore, thereto was added 0.2 part of AIBN (azobisisobutyronitrile, a free radical polymerization initiator), and the resultant was heated and stirred at 60°C. As a result, the polymerization of methyl methacrylate occurred although scales were slightly yielded as a byproduct. Moreover, the polymer [3] was copolymerized with methyl methacrylate.
This demonstrated that the polymer [3] acted effectively as a reactive emulsifier.

### (Example 4)

Mixed were sufficiently 20 parts of t-butyl acrylate, and 80 parts of n-butyl acrylate to prepare 100 parts of a monomer mixture. Thereafter, the same operations as in Example 3 were conducted to yield a polymer [4].
The polymer [4] had, in the main chain thereof, 20% by mole of a polar functional group (a carboxyl group) and further had, at the terminal(s) of the molecule, a group having a carbon-carbon double bond (an acryloyl group). The number-average molecular weight of the polymer [4] was 7600, and the molecular weight distribution was 1.2. The acryloyl group was introduced in an average number of 0.7 per molecule of the polymer.

### (Example 5)

A polymer [5] was yielded in the same way as in Example 4 except that potassium methacrylate was used instead of potassium acrylate.
The polymer [5] had, in the main chain thereof, 20% by mole of a polar functional group (a carboxyl group) and further had, at the terminal(s) of the molecule, a group having a carbon-carbon double bond (a methacryloyl group). The number-average molecular weight of the polymer [5] was 8400, and the molecular weight distribution was 1.2. The acryloyl group was introduced in an average number of 1.0 per molecule of the polymer.

### (Properties of the polymer [4] and polymer [5])

The polymers [4] and [5] were each dissolved in water under a basic condition. One part of the polymer [4] or [5] was added to 100 parts of water and 10 parts of methyl methacrylate so that a homogeneous emulsion was yielded. Furthermore, thereto was added 0.2 part of AIBN (azobisisobutyronitrile, a free radical polymerization initiator), and the resultant was heated and stirred at 60°C. As a result, any one of the polymers was copolymerized with methyl methacrylate.
When the polymer [4] was used, a large amount of methyl methacrylate was consumed at the initial stage of the polymerization. Thus, a copolymer wherein the ratio of methyl methacrylate to the polymer [4] was gradient was yielded.
On the other hand, when the polymer [5] was used, methyl methacrylate and the polymer [5] were evenly consumed. Thus, a copolymer wherein the ratio of methyl methacrylate to the polymer [5] was uniform was yielded.
Even when any one of the polymers [4] and [5] was used, no scales were generated and the polymerization solution was stable, which was different from the case of the polymer [3].
This demonstrated that the polymers [4] and [5] each acted as a reactive emulsifier and were effectively than the polymer [3].

### (Example 6)

Mixed were sufficiently 10 parts of t-butyl acrylate, and 90 parts of n-butyl acrylate to prepare 100 parts of a monomer mixture. Thereafter, the same operations as in Example 2 were conducted to yield a polymer [6].
The polymer [6] had, in the main chain thereof, 10% by mole of a polar functional group (a carboxyl group) and further had, at the terminal(s) of the molecule, a group having a carbon-carbon double bond (an acryloyl group). The number-average molecular weight of the polymer [6] was 18000, and the molecular weight distribution was 2. The acryloyl group was introduced in an average number of 1.5 per molecule of the polymer.

### (Properties of the polymer [6])

One hundred parts of the polymer [6] were dissolved in toluene, and thereto were added 1 part of Darocure 1173 (photoinitiator which is used to generate radical, manufactured by Ciba Specialty Chemicals Inc.), and 0.5 part of Irgacure 819 (photoinitiator which is used to generate radical, manufactured by Ciba Specialty Chemicals Inc.). The resultant was painted into a sheet form. Toluene was removed under reduced pressure. Thereafter, the sheet was partially masked and the partially-masked sheet was irradiated with ultraviolet rays. Conditions for the irradiation with the ultraviolet rays were as follows: the lamp load was 80 W/cm, the radiation distance was 15 cm, the radiating time was 30 seconds, and the radiation was conducted one time.
The region not irradiated with the ultraviolet rays was dissolved when the region was washed with water. However, the region irradiated with the ultraviolet rays was not dissolved so as to keep the shape thereof.
This demonstrated that the polymer [6] had basic characteristics for photoresist material.

## Claims

1. A vinyl polymer having a polar functional group (X), and further having, at a position of at least one molecular terminal thereof, a group (A) containing a carbon-carbon double bond.

2. The vinyl polymer according to claim 1, wherein the polar functional group (X) is at least one selected from the group consisting of a carboxyl group, a hydroxyl group, an epoxy group, an amino group, an amide group, a silyl group, an acetylacetonato group, and a mercapto group.

3. The vinyl polymer according to claim 1 or 2, wherein the main chain of the vinyl polymer is produced by polymerizing at least one monomer, as a main monomer, selected from the group consisting of a (meth) acrylic monomer, an acrylonitrile based monomer, an aromatic vinyl monomer, a fluorine-containing vinyl monomer, and a silicon-containing vinyl monomer.

4. The vinyl polymer according to any one of claims 1 to 3, which has a number-average molecular weight of 3000 or more.

5. The vinyl polymer according to any one of claims 1 to 6, wherein a ratio of a weight-average molecular weight (Mw) to a number-average molecular weight (Mn) (Mw/Mn) is less than 1.8, the molecular weights being measured by gel permeation chromatography.

6. The vinyl polymer according to any one of claims 1 to 5, wherein the group (A) containing a carbon-carbon double bond is a group represented by the following general formula 1:
-OC(O)C(R¹)=CH₂ (1)
wherein R¹ represents a hydrogen atom, or a hydrocarbon group which has 1 to 20 carbon atoms and may have one or two oxygen atoms.

7. The vinyl polymer according to claim 6, wherein R¹ in the general formula 1 is hydrogen or a methyl group.

8. The vinyl polymer according to any one of claims 1 to 7, wherein the group (A) containing a carbon-carbon double bond is a group represented by the following general formula 2:
-R³-C (R²) =CH₂ (2)
wherein R² represents a hydrogen atom, or a hydrocarbon group which has 1 to 20 carbon atoms and may have one or two oxygen atoms, and R³ represents a direct bond or a hydrocarbon group having 1 to 20 carbon atoms.

9. The vinyl polymer according to claim 8, wherein R² in the general formula 2 is a hydrogen atom or a methyl group.

10. The vinyl polymer according to any one of claims 1 to 9, which is a linear polymer.

11. The vinyl polymer according to any one of claims 1 to 9, which is a branched polymer.

12. The vinyl polymer according to any one of claims 1 to 11, wherein the main chain of the vinyl polymer is produced by radical polymerization.

13. The vinyl polymer according to claim 12, wherein the radical polymerization is living radical polymerization.

14. The vinyl polymer according to claim 13, wherein the living radical polymerization is atom transfer radical polymerization.

15. The vinyl polymer according to claim 1, wherein a percentage of a constituting unit having the polar functional group (X) in constituting units which originate from a monomer constituting the main chain of the vinyl polymer is from 1 to 100% by mol.

16. The vinyl polymer according to claim 1, wherein at least 0.8 or more polar functional groups (X) are contained per molecule.

17. The vinyl polymer according to any one of claims 1 to 16, wherein each of the polar functional groups (X) is located at random in the molecular chain.

18. The vinyl polymer according to any one of claims 1 to 16, wherein each of the polar functional groups (X) is arranged in a block form or a gradient form in the molecular chain.

19. A process for producing the vinyl polymer as claimed in any one of claims 1 to 18, **characterized in that** the process comprises: copolymerizing a monomer (ii) containing a functional group (Y) to yield a vinyl monomer, and/or using an initiator containing a functional group (Y) to yield a vinyl polymer; and then converting the functional group (Y) to the polar functional group (X).

20. The process for producing the vinyl polymer according to claim 19, wherein the functional group (Y) is a group represented by the following general formula 3:
-C(O)-O-Z (3)
wherein Z is represented by the following general formula 4:
-Cₓ(R⁴)(R⁵)(R⁶) (4)
wherein Cₓ represents a carbon atom or a silicon atom, R⁴ to R⁶ each represent a hydrocarbon group having 1 to 20 carbon atoms, and R⁴ to R⁶ may be the same or different and may be independent of each other or bonded to each other.

21. The process for producing the vinyl polymer according to claim 20, wherein the group Z in the general formula 3 is a group selected from the group consisting of a t-butyl group, an isobornyl group, a norbornyl group, an adamanthyl group, a triphenylmethyl group, and a trimethylsilyl group.
